# EUROPEAN PATENT APPLICATION

(11) **EP 3 739 670 A1**
(43) Date of publication of application: **18.11.2020**
(21) Application number: 20169520.2
(22) Date of filing: 15.04.2020
(51) Int. Cl.: H01M 2/20, H01M 10/615, H01M 10/617, H01M 10/625, H01M 10/6554

(54) **BUS BAR MODULE**

(30) Priority: 17.05.2019 JP 2019093564
(71) Applicant: YAZAKI CORPORATION, Minato-ku, Tokyo 108-8333 (JP)
(72) Inventor: YASUDA, Tomoji, Makinohara-shi, Shizuoka (JP); ICHIKAWA, Yoshiaki, Makinohara-shi, Shizuoka (JP); OGA, Tatsuya, Makinohara-shi, Shizuoka (JP)
(74) Representative: Grünecker Patent- und Rechtsanwälte PartG mbB

(57) **Abstract**

A bus bar module is used to be attached to a battery assembly having a plurality of unit battery cells stacked each other. The bus bar module includes bus bars each to be connected to each of the plurality of the unit battery cells; a heating body capable of heating the battery assembly; and a holder holding the bus bars and the heating body. The heating body is configured to be disposed between a pair of electrode portions of each of the plurality of the unit battery cells.

## Description

### CROSS-REFERENCES TO RELATED APPLICATION(S)

This application is based on and claims priority from Japanese Patent Application No. 2019-093564 filed on May 17, 2019, and the entire contents of which are incorporated herein by reference.

### BACKGROUND

### Field of the Invention

The present invention relates to a bus bar module to be attached to a battery assembly having a number of unit battery cells stacked each other.

### Description of Related Art

Bus bar modules have been used conventionally to, for example, supply power to various kinds of electric devices from a battery assembly in which plural unit battery cells are laid on each other. In bus bar modules of this type, each unit battery cell is also called a "cell" and the battery assembly is also called a "battery module".

One example of conventional bus bar module is equipped with plural bus bars each of which connects the positive electrode and the negative electrode of adjacent ones of cells laid on each other and voltage detection lines that are connected to the plural respective bus bars and serve to monitor the potential states etc. of the respective cells connected to the plural bus bars. The voltage detection lines are formed in such a manner that plural electric wires each having a common structure that a core wire is covered with an insulating covering are bundled together (refer to Patent document 1, for example).

As for details of the above bus bar module, refer to JP 2016-048635 A.

### SUMMARY

In general, the performance (e.g., discharge characteristic) of each of cells constituting a battery module varies depending on its temperature. In particular, there is a general tendency that the output voltage of a cell decreases as its temperature becomes lower. In view of this, when a battery module is used actually, a temperature increasing device (e.g., electric heater) for increasing the temperatures of the cells to proper temperatures when their temperatures are low may be disposed adjacent to the battery module.

However, to use a temperature increasing device actually, it is necessary to secure, around the battery module, a space in which to dispose the temperature increasing device itself and electric wires for driving and controlling it. This increases the size of the whole of a power supply system including the battery module and the temperature increasing device, possibly obstructing application of the power supply system to things that are restricted severely in installation spaces, such as automobiles.

The present invention has been made in view of the above circumstances, and an object of the invention is therefore to provide a bus bar module enabling both of temperature control of unit battery cells constituting a battery assembly and miniaturization of a power supply system including the battery assembly.

Embodiments of the present invention provide the following items [1] to [3]:
[1] A bus bar module to be attached to a battery assembly having a plurality of unit battery cells stacked each other, the bus bar module comprising:
   bus bars each to be connected to each of the plurality of the unit battery cells;
   a heating body capable of heating the battery assembly; and
   a holder holding the bus bars and the heating body,
   the heating body being configured to be disposed between a pair of electrode portions of each of the plurality of the unit battery cells.
[2] The bus bar module according to the item [1], further comprising circuit members connected to the bus bars and extend in a stack direction of the plurality of the unit battery cells, wherein
   the heating body includes the circuit members.
[3] The bus bar module according to the item [1] or the item [2], wherein the holder is configured to allow the bus bars and the heating body to be attached to the battery assembly in an integrated manner in a state of the bus bars and the heating body being held by the holder.

According to first aspect of the invention, relating to the item [1], the heating body capable of heating the battery assembly is held by the holder as part of the bus bar module. As a result, a power supply system can be made smaller than in a case that a temperature increasing device (i.e., heating body) is disposed in the vicinity of a battery assembly as a member that is separate from a bus bar module as in the conventional power supply system described above. Furthermore, where the heating body is disposed between the pairs of electrode portions (e.g., pairs of electrode columns) of the respective unit battery cells, portions, distant from the electrode portions and the bus bars where Joule heat is generated by conduction during operation of the battery assembly, of the unit battery cells (e.g., central portions of the unit battery cells in the case where each pair of electrode columns are located at two respective end positions of each unit battery cell) can be heated by the heating body. As a result, the entire unit battery cells can be heated properly, allowing the unit battery cells to exercise their design performance. As such, the bus bar module having the above configuration enables both of temperature control of the unit battery cells constituting the battery assembly and miniaturization of the power supply system including the battery assembly.

According to second aspect of the invention, relating to the item [2], the circuit members used for, for example, monitoring the potential states of the respective unit battery cells can be employed as heating bodies for heatin g the unit battery cells 2. Since the circuit members extend in the lamination direction (longitudinal direction) of the plural unit battery cells, they can heat all of the plural unit battery cells properly. The Joule heat generated by the circuit members are thus utilized without waste, contributing to further miniaturization of the power supply system. The heating bodies may either have only the circuit members as a heat source or have another heat source in addition to the circuit members

According to third aspect of the invention, relating to the item [3], the bus bars and the heating body can be attached to the battery assembly together by attaching, to the battery assembly, the holder to which the bus bars and the heating body or bodies are attached in advance. As a result, in addition to the miniaturization of the power supply system, the efficiency of work of attaching the bus bar module to the battery assembly can be increased.

The invention can provide a bus bar module enabling both of temperature control of unit battery cells constituting a battery assembly and miniaturization of a power supply system including the battery assembly.

The invention has been described above concisely. The details of the invention will become more apparent when the modes for carrying out the invention (hereinafter referred to as an embodiment) described below are read through with reference to the accompanying drawings.

### BRIEF DESCRIPTION OF THE DRAWINGS

Fig. 1 is a top view of a bus bar module according to an embodiment of the present invention that is attached to a battery assembly.
Fig. 2 is a perspective view of the battery assembly shown in Fig. 1.

### DETAILED DESCRIPTION

### Embodiment

A bus bar module 10 according to an embodiment of the present invention will be hereinafter described with reference to the drawings. The bus bar module 10 is used in such a manner as to be attached to a battery assembly (i.e., a battery module in which plural unit battery cells are laid on each other) that is a drive power source to be installed in an electric vehicle, a hybrid vehicle, or the like.

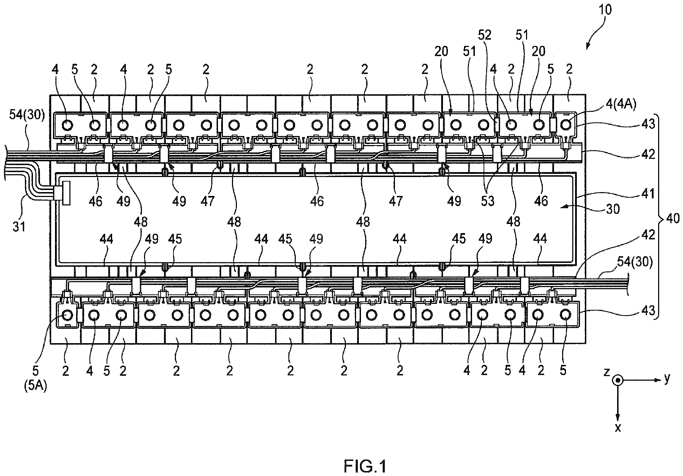

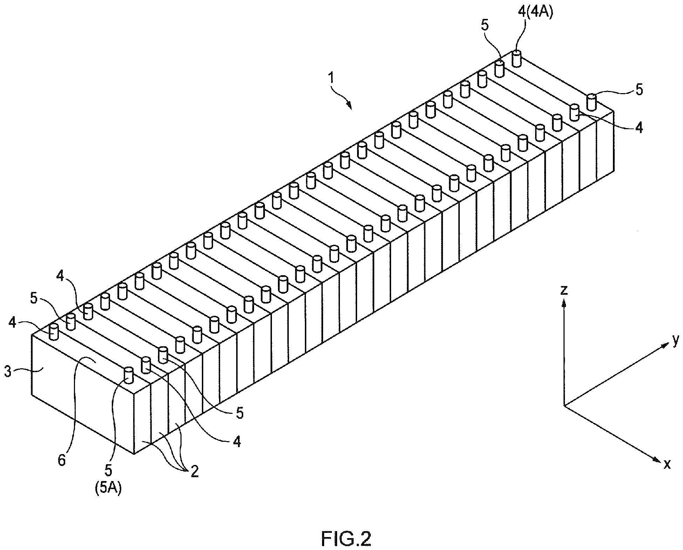

For convenience of description, the X-axis direction, the Y-axis direction, and the Z-axis direction which are perpendicular to each other are defined as shown in Figs. 1 and 2. The X-axis direction, the Y-axis direction, and the Z-axis direction are also called a width direction, a longitudinal direction (lamination direction), and a top-bottom direction, respectively.

First, the battery assembly 1 to which the bus bar module 10 is attached will be described. As shown in Fig. 2, the battery assembly 1 is an assembly of plural unit battery cells 2. Each unit battery cell 2 has a cuboid-shaped battery main body 3 and a cylindrical positive electrode 4 and negative electrode 5 which project upward from two respective end portions, in the width direction (X direction), of an electrode surface (top surface) of the battery main body 3.

The battery assembly 1 is configured in such a manner that plural unit battery cells 2 are laid on each other in the longitudinal direction in such a manner that the positive electrodes 4 and the negative electrodes 5 are arranged alternately in line in the longitudinal direction (lamination direction) (i.e., the positive electrode 4 and the negative electrode 5 of adjacent unit battery cells 2 are located adjacent to each other in the longitudinal direction). As a result, as a whole, the battery assembly 1 is shaped like one cuboid extending in the longitudinal direction. In the battery assembly 1, the positive electrode 4 of the unit battery cell 2 that is located at one end in the longitudinal direction functions as an assembly positive electrode 4A and the negative electrode 5 of the unit battery cell 2 that is located at the other end in the longitudinal direction functions as an assembly negative electrode 5A. The plural unit battery cells 2 constituting the battery assembly 1 are connected to each other in series electrically by plural bus bars 20 (described later). The description of the battery assembly 1 completes here.

Next, the bus bar module 10 will be described. As shown in Fig. 1, the bus bar module 10 is equipped with the plural bus bars 20 which are connected to the plural unit battery cells 2 of the battery assembly 1, a heating body 30 capable of heating the battery assembly 1, and a holder 40 which holds the plural bus bars 20 and the heating body 30.

Among the components of the bus bar module 10, first the holder 40 will be described below. The holder 40, which is made of a resin, has, in a unitized manner, a heating body housing portion 41 which houses the heating body 30, a pair of wire housing portions 42 which house plural electric wires 54 connected to the respective bus bars 20, and a pair of bus bar housing portions 43 which house the plural bus bars 20.

The heating body housing portion 41 is composed of a rectangular bottom wall portion extending in the longitudinal direction and a circumferential wall portion which is erected upward from approximately the entire outer edge of the bottom wall portion, and is thus shaped like a rectangular box that is open at the top. The heating body 30 is housed in the internal space of the heating body housing portion 41.

In this example, the heating body housing portion 41 is composed of plural (in this example, four) divisional portions 44 arranged in the longitudinal direction and expansion/contraction portions 45 each of which connects divisional portions 44 that are adjacent to each other in the longitudinal direction. The expansion/contraction portions 45 can be deformed easily in an elastic manner. Since the longitudinal interval between adjacent divisional portions 44 can therefore change, the heating body housing portion 41 can expand and contract as a whole in the longitudinal direction. As a result, the entire heating body housing portion 41 can expand and contract freely in the longitudinal direction in response to a variation of the longitudinal dimension of the battery assembly 1 due to its temperature-induced expansion or contraction.

The pair of wire housing portions 42 are disposed outside the heating body housing portion 41 in the width direction and extend in the longitudinal direction. Each wire housing portion 42 is composed of a bottom wall portion which is shaped like a long and narrow rectangle and extends in the longitudinal direction and a pair of side wall portions which are erected upward from the two respective side edges, in the width direction, of the bottom wall portion and extend in the longitudinal direction. As such, each wire housing portion 42 is shaped like a gutter that is open at the top. Plural electric wires 54 connected to respective bus bars 20 are housed in the internal space of each wire housing portion 42.

In this example, each wire housing portion 42 is composed of plural (in this example, three) divisional portions 46 which are arranged in the longitudinal direction and expansion/contraction portions 47 each of which connects divisional portions 44 that are adjacent to each other in the longitudinal direction. The expansion/contraction portions 47 can be deformed easily in an elastic manner. Thus, like the heating body housing portion 41, the whole of each wire housing portion 42 can expand and contract freely in the longitudinal direction in response to a variation of the longitudinal dimension of the battery assembly 1 due to its temperature-induced expansion or contraction.

Each wire housing portion 42 (more specifically, its plural divisional portions 46) is connected to the heating body housing portion 41 in the width direction in a unitized manner by connection portions 48 at plural positions in the longitudinal direction. Each wire housing portion 42 is provided with, at plural positions in the longitudinal direction, holding portions 49 for holding the electric wires 54 housed therein.

The pair of bus bar housing portions 43 are disposed outside the pair of wire housing portions 42 in the width direction and extend in the longitudinal direction. In this example, each bus bar housing portion 43 is composed of plural individual housing portions 51 arranged in the longitudinal direction and expansion/contraction portions 52 each of which connects individual housing portions 51 that are adjacent to each other in the longitudinal direction. The expansion/contraction portions 52 can be deformed easily in an elastic manner. Thus, like the heating body housing portion 41 and each wire housing portion 42, each bus bar housing portion 43 can expand and contract freely in the longitudinal direction in response to a variation of the longitudinal dimension of the battery assembly 1 due to its temperature-induced expansion or contraction.

The bus bars 20 are housed in the respective individual housing portions 51. Each individual housing portion 51 is formed by a circumferential wall portion that is shaped like a rectangular frame and on which the corresponding bus bar 20 can be locked so as to be surrounded by the individual housing portion 51.

Among the plural individual housing portions 51, the individual housing portion 51 that is located at one end (right-hand end in Fig. 1), in the longitudinal direction, of the bus bar housing portion 43 located on one side (top side in Fig. 1) in the width direction houses the bus bar 20 that is connected to the assembly positive electrode 4A. The individual housing portion 51 that is located at the other end (left-hand end in Fig. 1), in the longitudinal direction, of the bus bar housing portion 43 located on the other side (bottom side in Fig. 1) in the width direction houses the bus bar 20 that is connected to the assembly negative electrode 5A. Since these two bus bars 20 are smaller in a plan view than the other bus bars 20, these two individual housing portions 51 are smaller in a plan view than the other individual housing portions 51.

The circumferential wall portion of each individual housing portion 51 has an opening at the center, in the longitudinal direction, of its inside portion in the width direction, and is connected to the adjacent wire housing portion 42 (more specifically, divisional portion 46) in a unitized manner by a connection portion 53. The description of the holder 40 completes here.

Next, the plural bus bars 20 will be described. Each bus bar 20 is a single rectangular metal plate. A single through-hole for insertion of the assembly positive electrode 4A is formed through the bus bar 20 that is connected to the assembly positive electrode 4A and is small in a plan view (i.e., the top, right-end bus bar 20 in Fig. 1). A single through-hole for insertion of the assembly negative electrode 5A is formed through the bus bar 20 that is connected to the assembly negative electrode 5A and is small in a plan view (i.e., the bottom, left-end bus bar 20 in Fig. 1). A pair of through holes for insertion of a positive electrode 4 and a negative electrode 5 of the associated unit battery cells 2 are formed through each of the remaining bus bars 20.

An electric wire 54 is connected to each bus bar 20 so as to extend from the center, in the longitudinal direction, of the inside portion, in the width direction, of the bus bar 20. The other end of each electric wire 54 is connected to a voltage detection device (not shown). This makes it possible to monitor the potential state etc. of each unit battery cell 2. Thus, the electric wires 54 are also referred to as voltage detection lines. The description of the bus bars 20 completes here.

Next, the heating body 30 will be described. The heating body 30 has such a cuboid shape as to be housed in the heating body housing portion 41. The heating body 30 is provided to heat the plural unit battery cells 2 of the battery assembly 1 (in particular, central portions, in the width direction, of the respective unit battery cells 2). Power/communication wires 31 are connected to the heating body 30. The power/communication wires 31 go out of the heating body housing portion 41 through an opening of its circumferential wall portion. The heating body 30 is configured so as to operate (i.e., generate heat) by receiving power and a control signal from a control device (not shown) which is connected to end portions of the power/communication wires 31. A specific heating structure of the heating body 30 may be one of known structures. The descriptions of the respective components of the bus bar module 10 complete here.

Next, a description will be made of how to attach the bus bar module 10 to the battery assembly 1. First, to complete the bus bar module 10, the heating body 30 is housed in the heating body housing portion 41 of the holder 40. The power/communication wires 31 extending from the heating body 30 are led out of the heating body housing portion 41 through the opening of its circumferential wall portion.

Subsequently, the plural bus bars 20 to which the electric wires 54 are connected are housed in the corresponding individual housing portions 51 of the pair of bus bar housing portions 43. The plural electric wires 54 extending from the plural bus bars 20 housed in the bus bar housing portion 43 that is located on one side in the width direction (i.e., top bus bar housing portion 43 in Fig. 1) are introduced into the wire housing portion 42 located on the one side in the width direction (i.e., top wire housing portion 42 in Fig. 1) and are led out of that wire housing portion 42 from the left-hand end portion (see Fig. 1) of that wire housing portion 42. Likewise, the plural electric wires 54 extending from the plural bus bars 20 housed in the bus bar housing portion 43 that is located on the other side in the width direction (i.e., bottom bus bar housing portion 43 in Fig. 1) are introduced into the wire housing portion 42 located on the other side in the width direction (i.e., bottom wire housing portion 42 in Fig. 1) and are led out of that wire housing portion 42 from the right-hand end portion (see Fig. 1) of that wire housing portion 42.

The plural electric wires 54 thus housed in the pair of wire housing portion 42 are thereafter held by the plural holding portions 49. The plural electric wires 54 which extend in the longitudinal direction being held in the pair of wire housing portions 42 constitute a term "circuit members," used in the claims.

A state that the plural bus bars 20 and the heating body 30 are held by the holder 40 is obtained by the above procedure and the bus bar module 10 is completed.

Subsequently, the thus-completed bus bar module 10 is attached to the battery assembly 1. In particular, the holder 40 is put on the top surface of the battery assembly 1 so that the electrodes 4 and 5 of the battery assembly 1 are inserted into the corresponding through-holes of the plural bus bars 20 and that the bottom wall portion of the heating body housing portion 41 and the bottom wall portions of the pair of wire housing portions 42 come into contact with the top surface of the battery assembly 1. As a result, the plural bus bars 20 and the heating body 30 are attached to the battery assembly 1 in an integrated manner in a state that they are held by the holder 40.

Then each bus bar 20 is fixed to electrodes 4 and 5 of the corresponding unit battery cells 2 by, for example, welding or fastening using a nut or the like. The attachment of the bus bar module 10 to the battery assembly 1 is thus completed by the above-described procedure.

In the state that the attachment of the bus bar module 10 has been completed, the heating body 30 and the plural electric wires 54 (circuit members) housed in the pair of wire housing portions 42 and extending in the longitudinal direction are located at positions where they are close to the top surface of the battery assembly 1 and are interposed between the pairs of electrodes 4 and 5 of the plural respective unit battery cells 2. In particular, the heating body 30 is located over central portions, in the width direction, of the unit battery cells 2.

The battery assembly 1 to which the bus bar module 10 is attached operates in a state that the plural electric wires 54 extending from the pair of wire housing portions 42 are connected to the voltage detection device (not shown) and the power/communication wires 31 extending from the heating body 30 are connected to the control device (not shown).

The heating body 30 is activated to increase the temperature of the unit battery cells 2 to a proper temperature when a temperature(s) of a unit battery cell or batteries 2 detected by a temperature sensor(s) such as a thermistor(s) (not shown) provided for a unit battery cell or batteries 2 is lower than a prescribed temperature. Upon activation of the heating body 30, central portions, in the width direction, of the respective unit battery cells 2 are heated by heat generated by the activated heating body 30.

Furthermore, the plural electric wires 54 (circuit members) housed in the pair of wire housing portions 42 and extending in the longitudinal direction generate Joule heat. Portions, inside and in the vicinities of the pairs of electrodes 4 and 5 in the width direction, of the respective unit battery cells 2 are also heated by such Joule heat. Still further, portions around the pairs of electrodes 4 and 5 of the unit battery cells 2 are also heated by Joule heat generated by the pairs of electrodes 4 and 5 and the bus bars 20. As such, the plural electric wires 54 (circuit members) can serve to not only transmit signals for monitoring the potential states etc. of the respective unit battery cells 2 but also exercise a heating function in approximately the same degree as the heating body 30 does.

As described above, in the embodiment, the heating body 30 and the "circuit members" (i.e., the plural electric wires 54 housed in the pair of wire housing portions 42 and extending in the longitudinal direction) are employed as the "heating bodies disposed between the pairs of electrode portions (electrodes 4 and 5) of the respective unit battery cells 2." Alternatively, only the heating body 30 or only the "circuit members" (i.e., only the plural electric wires 54 housed in the pair of wire housing portions 42 and extending in the longitudinal direction) may be employed as the "heating bodies disposed between the pairs of electrode portions of the respective unit battery cells 2."

As described above, in the bus bar module 10 according to the embodiment of the invention, the heating body 30 capable of heating the battery assembly 1 is held by the holder 40 as part of the bus bar module 10. As a result, the entire power supply system including the battery assembly 1 and the heating body 30 can be made smaller than in a case that a temperature increasing device (i.e., heating body) is disposed in the vicinity of a battery assembly as a member that is separate from a bus bar module as in the conventional power supply system described above. Furthermore, since the heating body 30 is disposed between the pairs of electrodes 4 and 5 of the respective unit battery cells 2, portions, distant from the electrodes 4 and 5 and the bus bars 20 where Joule heat is generated by conduction during operation of the battery assembly 1, of the unit battery cells 2 (more specifically, central portions, in the width direction, of the unit battery cells 2) can be heated by the heating body 30. As a result, the entire unit battery cells 2 can be heated properly, allowing the unit battery cells 2 to exercise their design performance. As such, the bus bar module 10 having the above configuration enables both of temperature control of the unit battery cells 2 constituting the battery assembly 1 and miniaturization of the power supply system including the battery assembly 1.

Furthermore, in the bus bar module 10, the "circuit members" (i.e., the plural electric wires 54 housed in the pair of wire housing portions 42 and extending in the longitudinal direction) used for, for example, monitoring the potential states of the respective unit battery cells 2 can be employed as heating bodies for heating the unit battery cells 2. Since the circuit members extend in the lamination direction (longitudinal direction) of the plural unit battery cells 2, they can heat all of the plural unit battery cells 2 properly. The Joule heat generated by the circuit members are thus utilized without waste, contributing to further miniaturization of the power supply system.

Still further, in the bus bar module 10, the bus bars 20 and the heating body 30 can be attached to the battery assembly 1 together by attaching, to the battery assembly 1, the holder 40 to which the bus bars 20 and the heating body 30 are attached in advance. As a result, in addition to the miniaturization of the power supply system, the efficiency of work of attaching the bus bar module 10 to the battery assembly 1 can be increased.

### Other Embodiments

In addition, the invention is not limited to the aforementioned embodiments, but various modifications can be used within the scope of the invention. For example, the invention is not limited to the aforementioned embodiments, but changes, improvements, etc. can be made on the invention suitably. In addition, materials, shapes, dimensions, numbers, arrangement places, etc. of respective constituent elements in the aforementioned embodiments are not limited. Any materials, any shapes, any dimensions, any numbers, any arrangement places, etc. may be used as long as the invention can be attained.

Features of the bus bar module 10 according to the embodiment of the invention will be summarized below concisely in the form of items [1] to [3]:
[1] A bus bar module (10) to be attached to a battery assembly (1) having a plurality of unit battery cells (2) stacked each other, the bus bar module (10) comprising:
   bus bars (20) each to be connected to each of the plurality of the unit battery cells (2);
   a heating body (30, 54) capable of heating the battery assembly (1); and
   a holder (40) holding the bus bars (20) and the heating body (30, 54),
   the heating body (30, 54) being configured to be disposed between a pair of electrode portions (4, 5) of each of the plurality of the unit battery cells (2).
[2] The bus bar module (10) according to the item [1], further comprising circuit members (54) connected to the bus bars (20) and extend in a stack direction of the plurality of the unit battery cells (2), wherein
   the heating body (30, 54) includes the circuit members (54).
[3] The bus bar module (10) according to the item [1] or the item [2], wherein
   the holder (40) is configured to allow the bus bars (20) and the heating body (30, 54) to be attached to the battery assembly (1) in an integrated manner in a state of the bus bars (20) and the heating body (30, 54) being held by the holder (40).

### REFERENCE SIGNS LIST

- 1:: Battery assembly
- 2:: Unit battery cell
- 4:: Positive electrode (electrode portion)
- 5:: Negative electrode (electrode portion)
- 10:: Bus bar module
- 20:: Bus bar
- 30:: Heating body
- 40:: Holder
- 54:: Electric wire (circuit member, heating body)

## Claims

1. A bus bar module to be attached to a battery assembly having a plurality of unit battery cells stacked each other, the bus bar module comprising:
bus bars each to be connected to each of the plurality of the unit battery cells;
a heating body capable of heating the battery assembly; and
a holder holding the bus bars and the heating body,
the heating body being configured to be disposed between a pair of electrode portions of each of the plurality of the unit battery cells.

2. The bus bar module according to Claim 1, further comprising circuit members connected to the bus bars and extend in a stack direction of the plurality of the unit battery cells, wherein
the heating body includes the circuit members.

3. The bus bar module according to Claim 1 or Claim 2, wherein
the holder is configured to allow the bus bars and the heating body to be attached to the battery assembly in an integrated manner in a state of the bus bars and the heating body being held by the holder.
